# FASCICULE DE BREVET EUROPEEN

(11) **EP 3 229 483 B1**
(45) Date de publication et mention de la délivrance du brevet: **14.09.2022**
(21) Numéro de dépôt: 17165587.1
(22) Date de dépôt: 07.04.2017
(51) Int. Cl.: H04N 21/4405, H04N 21/61, H04N 21/2343, H04N 21/262, H04N 21/472, H04N 21/6377, H04N 21/6587, H04N 21/845

(54) **EXTRACTION DE FLUX VIDEO**
EXTRAKTION DES VIDEO-STREAMS
EXTRACTION OF VIDEO STREAMS

(30) Priorité: 08.04.2016 FR 1653150
(43) Date de publication de la demande: 11.10.2017
(73) Titulaire: Squadeo, 78160 Marly le Roi (FR)
(72) Inventeur: DELAHAYE, Nicolas, 78160 MARLY LE ROI (FR); MARTIN, François, 75015 PARIS (FR); PIQUET, Ludovic, 78160 MARLY LE ROI (FR); PASQUET, Frédéric, 78160 MARLY LE ROI (FR); GRONDIN, David, 78160 MARLY LE ROI (FR)
(74) Mandataire: Plasseraud IP

(56) Documents cités:
- CN-A- 102 594 773
- US-A1- 2013 007 223
- US-A1- 2014 359 679

## Description

La description se rapporte au domaine de la distribution de contenu vidéo.

Les magnétoscopes (qui enregistraient et lisaient des films sur bandes magnétiques), comprenaient une fonction d'avance rapide ou de recul rapide. Il fallait pour cela faire tourner un moteur électrique entraînant la bande magnétique à une vitesse plus élevée, et le cas échéant inverser le sens de rotation de ce moteur électrique.

Désormais, les vidéos sont souvent stockées sur des serveurs auxquels se connectent des terminaux (ordinateurs personnels fixes ou portables, tablettes, téléphones portables, etc.). Ces terminaux permettent de visualiser des vidéos en streaming (terme de langue anglaise parfois traduit en français par l'expression "flux continu"). Les terminaux et les serveurs peuvent présenter des capacités de stockage et de calcul importantes. Mais la bande passante disponible entre un terminal et un serveur constitue souvent un goulet d'étranglement.

Les serveurs stockant des flux vidéo sont généralement des serveurs de distribution, qui pour l'essentiel stockent des flux vidéo chiffrés et les transmettent sur demande, mais qui sont incapables de déchiffrer euxmêmes ces flux vidéo et a fortiori d'en extraire des informations ciblées. En effet, ils ne disposent pas (à dessein, pour des raisons de sécurité) des clés cryptographiques requises pour opérer un tel déchiffrement. Les clés cryptographiques de déchiffrement sont habituellement fournies directement aux terminaux, par d'autres serveurs (dits serveurs DRM) qui, après authentification d'un terminal et vérification de ses droits d'accès, communiquent à ce terminal les informations requises pour lui permettre de déchiffrer le flux vidéo reçu de la part d'un serveur de distribution. Ces informations requises ne sont pas nécessairement la clé cryptographique proprement dite, mais peuvent être des informations à partir desquelles le terminal est en mesure de calculer la clé cryptographique.

Dans un tel schéma, afin d'opérer une avance rapide, il semblerait naturel de télécharger le flux vidéo à une vitesse plus rapide, mais souvent la bande passante disponible ne le permet pas. Même lorsque la bande passante permet par exemple de tripler la vitesse du téléchargement pour procéder à une lecture accélérée d'un facteur trois, ceci n'est pas satisfaisant dans la mesure où ceci représente un gâchis de bande passante.

De plus, une autre difficulté se pose. Afin de se déplacer de façon éclairée et pertinente au sein d'un flux vidéo, il est utile de disposer d'une représentation approximée du contenu de ce flux vidéo. Or pour construire cette représentation approximée, il faut accéder à des éléments répartis sur l'ensemble du flux vidéo (du début à la fin de ce flux vidéo).

Il a été proposé de fournir un bandeau contenant des scènes représentatives de la vidéo complète, par exemple une image prise toutes les minutes, afin de permettre à un utilisateur de se repérer dans le flux vidéo et de cliquer directement sur l'image correspondant à la scène qui l'intéresse. C'est ce que fait par exemple la société Google pour son service Youtube. Le serveur est alors adapté pour générer une image contenant une série d'images miniatures correspondant à différents moments du flux vidéo. La société Apple a quant à elle développé une technologie dite HLS (acronyme de l'expression de langue anglaise "HTTP live streaming", signifiant: diffusion HTTP en direct). Cette technologie permet au serveur de générer à partir d'un flux vidéo des images représentatives et de les transmettre sur demande. Mais dans l'un et l'autre cas, il est nécessaire de disposer d'un contrôle suffisant sur le serveur de distribution (qu'il faut pouvoir modifier pour lui ajouter les fonctionnalités requises). Surtout, si le flux vidéo est chiffré, il faut pouvoir déchiffrer le flux vidéo au niveau de ce serveur, ce qui, souvent, n'est pas possible, et n'est souvent pas désirable pour des raisons de sécurité.

Il aurait pu paraître concevable de transmettre une partie seulement du flux vidéo (par exemple une image sur trois), mais cette solution n'est pas envisagée car le serveur de distribution ne sait pas accéder aux images du flux vidéo, qui sont chiffrées. De plus, il ne suffit pas d'identifier une image sur trois et de la transmettre car les images sont compressées, et certaines images ne sont pas autosuffisantes (ne peuvent pas être décompressées sans informations complémentaires).

Plus précisément, il est fréquent que les vidéos comprennent trois types d'images, dites images I, images B et images P.

Les images I sont des images autosuffisantes, au sens où elles sont compressées (par exemple avec un algorithme tel que l'algorithme JPEG), sans se soucier des images qui les entourent. De telles images I sont utiles notamment pour les flux vidéo qui peuvent être visualisés en cours de route (sans partir du début), comme par exemple des flux vidéo relatifs à des événements filmés en direct. Il y a par exemple généralement une ou deux images I par seconde dans une vidéo de type H264.

Les images P sont définies par différence par rapport à l'image précédente. Comme des images consécutives sont généralement ressemblantes, ceci permet d'accroître le taux de compression. Cependant, une image ne peut alors être décompressée qu'en présence de l'image précédente, qui doit être intègre (à défaut, l'image décompressée est mal restituée).

Enfin, les images B sont encore plus compressées (à qualité équivalente) car elles peuvent tirer partie non seulement de l'image précédente mais également de l'image suivante. Ceci impose une latence puisque la décompression d'un image B impose d'avoir reçu l'image suivante également. Ceci oblige également à conserver en mémoire trois images (la précédente, l'actuelle et la suivante).

En pratique, un flux vidéo comprend une séquence d'images alternant ces différents types d'images I, P, B, par exemple selon l'ordre: IBBPBBPBBPBBI. D'autres types d'images et d'alternances d'images sont possibles, mais dans une majorité des mises en œuvre, toute image du flux vidéo n'est pas autosuffisante du point de vue de la décompression (seules certaines le sont).

De plus, la taille des images fluctue. Certaines images sont plus faciles à compresser que d'autres, et une image fortement compressée a par définition une taille plus faible qu'une image peu compressée.

La structure d'un flux vidéo étant complexe et ce flux vidéo étant chiffré, il ne paraissait pas possible d'opérer des extractions pertinentes.

Différentes techniques ont été proposées afin de résoudre des problèmes similaires ou connexes, et sont décrites notamment dans les demandes de brevet US 2006/0288392 A1, US 2013/0097508 A1, US 2014/0282262 A1 et US 2002/0075572 A1, ou encore dans l'article "Swift: Reducing the Effects of Latency in Online Video Scrubbing", Justin Matejka, Tovi Grossman, George Fitzmaurice, CHI'12, May 5-10, 2012, Austin, Texas, USA. Cependant, aucune ne résout les problèmes précités de manière satisfaisante. D'autres exemples de modes de réalisation de l'art antérieur peuvent être trouvés dans US 2014/359679 A1, dans US 2013/007223 A1 et dans CN 102 594 773 A.

L'invention vise à améliorer la situation.

Un aspect de l'invention se rapporte à un procédé d'extraction sélective, par un terminal, d'au moins une image à extraire contenue dans un flux vidéo chiffré comme défini dans le jeu de revendications joint. Par « version haute résolution », on entend une version du flux vidéo préférentiellement envoyée au terminal pour visualiser le contenu vidéo associé.

Par « version basse résolution », on entend une version correspondant à une résolution plus basse que la « version haute résolution ». En particulier et de manière non limitative, la version basse résolution choisie pour extraire les blocs peut être la version correspondant à la résolution la plus basse parmi toutes les résolutions stockées sur le serveur.

Un tel procédé est avantageux notamment en ce qu'il permet d'extraire d'un flux vidéo chiffré stocké sur un serveur de distribution les parties pertinentes de ce flux afin de procéder à une avance rapide (ou un retour rapide), et afin de construire un ensemble de vignettes (images de taille réduite) représentatives de l'ensemble du flux vidéo, à la manière d'une table des matières générée automatiquement. L'extraction permet de ne télécharger qu'une faible proportion de l'ensemble du flux vidéo, de surcroît en basse résolution, et ainsi de ne requérir qu'une faible bande passante.

Ainsi, une représentation approximative de la totalité du contenu vidéo peut être obtenue rapidement. L'utilisateur peut alors se déplacer dans l'ensemble de la vidéo de façon pertinente.

Un aspect de l'invention se rapporte à un programme d'ordinateur comprenant une série d'instructions qui, lorsqu'elles sont exécutées par au moins un processeur, mettent en œuvre un procédé selon un mode de réalisation de l'invention.

Un aspect de l'invention se rapporte à un support de stockage non transitoire lisible par ordinateur, stockant un programme d'ordinateur selon un mode de réalisation de l'invention.

Un aspect de l'invention se rapporte à un terminal agencé pour extraire sélectivement au moins une image à extraire contenue dans un flux vidéo chiffré comme défini dans le jeu de revendications joint.

Un aspect de l'invention se rapporte à un serveur agencé pour stocker plusieurs versions chiffrées d'un flux vidéo chiffré comme défini dans le jeu de revendications joint.

D'autres caractéristiques et avantages de l'invention apparaîtront à la lecture de la description qui va suivre. Celle-ci est purement illustrative et doit être lue en regard des dessins annexés sur lesquels:
- les figures 1 à 4 représentent des serveurs de diffusion selon différents modes de réalisation de l'invention coopérant avec un serveur de gestion de droit ainsi qu'avec un terminal selon différents modes de réalisation de l'invention ;
- la figure 5 représente un procédé selon un mode de réalisation de l'invention ;
- la figure 6 représente un terminal selon un mode de réalisation de l'invention ;
- la figure 7 représente un serveur de diffusion selon un mode de réalisation de l'invention.

Les réalisations suivantes sont des exemples. Bien que la description se réfère à un ou plusieurs modes de réalisation, ceci ne signifie pas nécessairement que chaque élément mentionné dans le cadre d'un mode de réalisation ne concerne que ce même mode de réalisation, ou que des caractéristiques de ce mode de réalisation s'appliquent seulement à ce mode de réalisation.

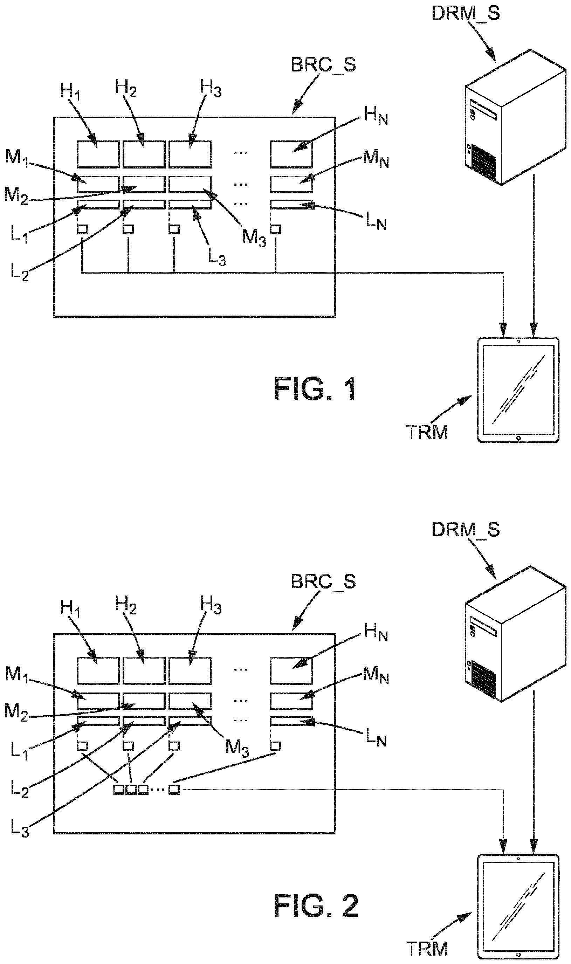

La figure 1 représente un mode de réalisation selon l'invention dans lequel un serveur de diffusion BRC_S de flux vidéo stocke une multitude de flux vidéo, dont seul un est représenté. Le serveur de diffusion BRC_S est représenté de manière schématique et fonctionnelle. Le flux vidéo représenté est stocké en trois versions, respectivement de haute qualité (par exemple avec une résolution de 1920 par 1080 pixels par image), de moyenne qualité (par exemple avec une résolution 640 par 480 pixels par image) et de basse qualité (par exemple avec une résolution de 320 par 200 pixels par image). Les trois flux sont identiques, à leur qualité près. La résolution est souvent le paramètre le plus important pour la qualité. Mais la qualité des flux peut résulter notamment de leur résolution (exemples précités), de leur profondeur (chaque pixel étant codé sur plus ou moins de bits avant compression, par exemple en 4294967296 couleurs soit 32 bits, en 16777216 couleurs soit 24 bits, ou en 65536 couleurs soit 16 bits), de leur fréquence (nombre d'images plus ou moins élevé par seconde), de leur taux de compression, ou encore d'une combinaison de deux ou plus des paramètres précités (résolution, profondeur, fréquence et taux de compression). Un flux de qualité inférieure présente en contrepartie une débit inférieur, et est donc plus rapide à transmettre (il peut être transmis avec une bande passante disponible plus faible que celle qui serait requise pour une transmission de plus haute qualité). Ceci permet de mettre en œuvre un algorithme dit ABR (acronyme de l'expression de langue anglaise Adaptive Bit Rate, qui signifie débit binaire adaptatif), selon lequel le flux transmis est adapté à la bande passante disponible. La qualité transmise est moins bonne lorsque la bande passante baisse et meilleure lorsqu'elle s'améliore, ce qui permet d'éviter toute interruption dans la diffusion (au pris d'une qualité ponctuellement dégradée). Le flux de haute résolution est composé de blocs H₁, H₂, H₃ ... H_{N}. Le flux de moyenne résolution est composé de blocs M₁, M₂, M₃ ... M_{N}. Le flux de basse résolution est composé de blocs L₁, L₂, L₃ ... L_{N}. Chaque bloc (H₁...H_{N}, M₁...M_{N}, L₁...L_{N}) de chacun des trois flux comprend par exemple environ 10 secondes de vidéo, soit, par exemple environ 250 images. Les 250 images du bloc L1 prennent beaucoup moins de mémoire que les 250 images du bloc H1.

Chaque bloc (H₁...H_{N}, M₁...M_{N}, L₁...L_{N}) de chacun des trois flux est chiffré. Le serveur de diffusion BRC_S n'a pas accès aux clés cryptographiques permettant de déchiffrer les blocs (H₁...H_{N}, M₁...M_{N}, L₁...L_{N}).

Un terminal TRM sur lequel le flux vidéo doit être joué doit donc se procurer une clé de déchiffrement auprès d'un serveur de gestion de droits DRM_S (voire plusieurs clés de déchiffrement si cette clé change au cours de la diffusion du flux). Il peut alors télécharger le flux vidéo (de préférence l'ensemble des blocs H₁, H₂, H₃ ... H_{N}, mais éventuellement des blocs de plus basse résolution lorsque la bande passante est insuffisante), ce qu'il fait par exemple au fur et à mesure qu'il joue ledit flux vidéo.

Afin de permettre une navigation au sein du flux vidéo, le terminal requiert dès que possible la transmission du début de chaque bloc L₁, L₂, L₃ ... L_{N}. Par exemple, il sollicite du serveur de diffusion la transmission des premiers 5% de chaque bloc. En principe, la première image du bloc est une image de type I, et elle occupe environ 2% du bloc. Ainsi, obtenir 5% du bloc assure de pouvoir décoder cette image même si l'image occupe un peu plus de 2%. Le terminal TRM peut déchiffrer les 5% reçus comme s'il s'agissait du déchiffrement du bloc entier, puis s'arrêter dès qu'il a réussi à extraire l'image de type I. Les pourcentages indiqués peuvent varier selon les algorithmes et protocoles utilisés.

Ainsi, alors même que le serveur de diffusion BRC_S ne peut pas déchiffrer, même partiellement, le contenu des blocs, on obtient une image pertinente en n'ayant téléchargé que 5% de ce bloc, de surcroît une version en basse résolution, plus rapide à télécharger que la version haute résolution. Ceci permet d'obtenir assez rapidement une représentation approximative de toute la vidéo et de se déplacer dans cette vidéo de façon pertinente.

Le serveur de diffusion BRC_S n'a pas besoin de mettre en œuvre de traitements supplémentaires substantiels (en termes de temps de calcul) par rapport à un serveur BRC_S de l'état de l'art.

La figure 2 représente un mode de réalisation selon l'invention dans lequel un serveur de diffusion BRC_S de flux vidéo stocke une multitude de flux vidéo, dont seul un est représenté. Le flux vidéo représenté est, comme sur la figure 1, stocké en trois versions, respectivement de haute résolution, de moyenne résolution et de basse résolution.

Au lieu de transmettre le début de chacun des blocs L₁, L₂, L₃ ... L_{N} au fur et à mesure qu'ils sont demandés, le serveur de diffusion BRC_S groupe ces débuts de blocs en un seul paquet qu'il transmet en une fois. Selon une mise en œuvre possible, en plus de concaténer les débuts de blocs, le serveur de diffusion BRC_S ajoute dans le paquet des métadonnées afin d'aider le terminal à retrouver chaque début de bloc considéré dans le paquet. Alternativement, le terminal TRM sait par construction où se trouvent les début de blocs, sans qu'il ne soit nécessaire de prévoir des métadonnées. Par exemple, les débuts de blocs peuvent avoir une taille prédéfinie.

Selon une mise en œuvre possible, le serveur de diffusion BRC_S stocke le paquet contenant les débuts de bloc concaténés dans un fichier, qu'il référence dans un fichier de liste de lecture principale. Ainsi, ce fichier peut être pré-calculé et être ensuite immédiatement disponible pour un téléchargement lorsqu'un terminal TRM sélectionne le flux vidéo considéré.

Cette concaténation évite les baisses d'efficacité subies par la transmission de multiples paquets (qui accroissent la bande passante nécessaire), en contrepartie, le cas échéant (mais pas nécessairement, comme indiqué ci-dessous), d'une latence quelque peu accrue. La concaténation n'est en effet possible qu'à partir du moment où tous les éléments à concaténer sont disponibles, ce qui est susceptible de retarder la transmission des éléments disponibles en premier.

Il est néanmoins possible de générer la concaténation une fois pour toutes. Ainsi la latence n'est alors perceptible que lors de la concaténation initiale, voire n'est pas perceptible du tout si la concaténation est effectuée lors d'une phase d'initialisation préalable (par exemple lors de l'enregistrement du flux sur le serveur).

Ce mode de réalisation nécessite en général de modifier le serveur de diffusion, mais ne requiert pas la faculté d'accéder aux clés de déchiffrement des flux vidéos stockés, ce qui serait inacceptable dans de nombreux cas.

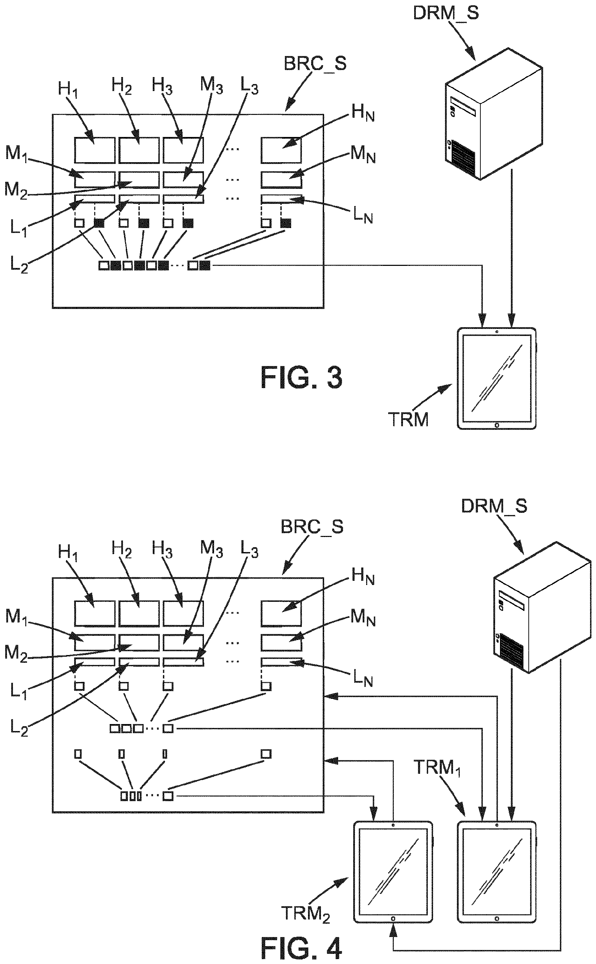

La figure 3 représente un mode de réalisation selon l'invention dans lequel un serveur de diffusion BRC_S de flux vidéo stocke une multitude de flux vidéo, dont seul un est représenté. Le flux vidéo représenté est, comme sur les figures 1 et 2, stocké en trois versions, respectivement de haute résolution, de moyenne résolution et de basse résolution.

Au lieu de ne transmettre que le début de chacun des blocs L₁, L₂, L₃ ... L_{N}, le serveur de diffusion BRC_S est agencé pour identifier une image au milieu de chaque bloc chiffré afin de transmettre deux images par bloc chiffré. En transmettant une image qui se situe environ au milieu du bloc chiffré (en plus de l'image de début de bloc chiffré), le procédé assure une équidistance temporelle de toutes les images.

Repérer une image I au milieu du bloc (et plus généralement n'importe où ailleurs qu'au tout début du bloc) est une tâche plus complexe que d'extraire la première image I du bloc. En effet, le début de la première image I peut être estimé avec une grande précision puisque c'est (en général) la première image du bloc. Mais plus on s'éloigne du début du bloc chiffré, plus l'incertitude croît quant à la position des images successives, dont chacune a une taille variable selon le flux vidéo considéré.

Il est néanmoins possible d'estimer statistiquement une fenêtre dans laquelle l'image I (ou les deux images I, en cas d'équidistance) la plus proche du milieu du bloc chiffré (ou d'une autre position ciblée du bloc chiffré) se trouve nécessairement. Il est alors possible de solliciter la transmission de l'intégralité de cette fenêtre, pour y rechercher l'image I considérée (ou l'une des deux images I considérées, ou les deux images I considérées). Par exemple, il est possible de solliciter la transmission d'une fenêtre (ou sous-ensemble) correspondant à 10% du bloc chiffré, centrée sur le milieu du bloc chiffré (ou sur toute autre position ciblée pertinente).

Dans certains cas, il est possible d'estimer analytiquement une fenêtre dans laquelle l'image I (ou les deux images I, en cas d'équidistance) la plus proche d'une position donnée dans le bloc chiffré se trouve nécessairement. Par exemple, dans certains flux vidéo chiffrés, les blocs ne sont pas chiffrés dans leur intégralité: un en-tête de bloc peut être transmis en clair (et contenir des indices plus ou moins précis sur les positions des images I), voire certaines parties en clair peuvent être présentes dans un bloc entre des éléments chiffrés, ces parties en clair étant par exemple des marqueurs d'images I.

Cependant, selon une mise en œuvre possible, les blocs sont intégralement chiffrés (aucune partie du flux vidéo n'est transmise en clair - l'intégralité du flux vidéo est chiffrée), et la méthode analytique n'est pas applicable.

Ceci est avantageux en particulier pour des flux vidéo de durée d'environ 10 à 20 minutes (et a fortiori pour les flux vidéo plus courts), pour lesquels extraire seulement une image par bloc revient généralement à n'extraire qu'une centaine d'images, ce qui correspond à une limite basse de ce qui est nécessaire pour permettre un confort satisfaisant.

Selon une mise en œuvre possible, au lieu de transmettre le début et le milieu de chacun des blocs chiffrés L₁, L₂, L₃ ... L_{N} au fur et à mesure qu'ils sont demandés, le serveur de diffusion BRC_S groupe ces débuts et milieux de blocs en un seul paquet qu'il transmet en une fois. Selon une mise en œuvre possible, en plus de concaténer les débuts et milieux de blocs chiffrés, le serveur de diffusion BRC_S ajoute dans le paquet des métadonnées afin d'aider le terminal à retrouver chaque début et milieu de bloc chiffré considéré dans le paquet. Alternativement, le terminal TRM sait par construction où se trouvent les débuts et milieux de blocs, sans qu'il ne soit nécessaire de prévoir des métadonnées. Par exemple, les débuts et milieux de blocs peuvent avoir une taille prédéfinie.

La figure 4 représente un mode de réalisation selon l'invention dans lequel un serveur de diffusion BRC_S de flux vidéo stocke une multitude de flux vidéo, dont seul un est représenté. Le flux vidéo représenté est, comme sur les figures 1 à 3, stocké en trois versions, respectivement de haute résolution, de moyenne résolution et de basse résolution.

Le serveur de diffusion BRC_S et les terminaux qui s'y connectent (notamment les terminaux TRM₁, TRM₂ représentés) sont agencés pour que chaque terminal, par ce que l'on pourrait qualifier de boucle de rétroaction, informe le serveur de diffusion BRC_S de la taille et de la position des images extraites. Ainsi, une fois qu'un terminal (sur la figure 4, le terminal TRM₁) a décodé les débuts de blocs chiffrés, il sait où chaque image commence et se termine dans chaque début de bloc chiffré. Il peut donc en informer le serveur de diffusion, qui, la prochaine fois qu'il doit transmettre les images considérées, ne transmet plus que les portions de bloc chiffré correspondant à ces images. Ainsi, si une image occupe 2% du bloc, et si initialement 5% du bloc sont transmis pour être sûr de bien récupérer toute l'image, la fois suivante il suffit de transmettre les 2% du bloc correspondant exactement à l'image considérée. En l'espèce, lorsque le terminal TRM₂ sollicite la transmission des mêmes informations que celles que le terminal TRM₁ a préalablement sollicitées, les débuts de blocs chiffrés sont tous, à part celui du bloc chiffré L_{N} (mais c'est spécifique au flux vidéo considéré) raccourcis. Le début du bloc chiffré L₁ est légèrement raccourci, celui du bloc chiffré L₂ l'est un peu plus, et celui du bloc chiffré L₃ l'est beaucoup plus. Celui du bloc chiffré L_{N} se trouve, dans l'exemple considéré, avoir eu exactement la taille requise, il n'est donc pas raccourci.

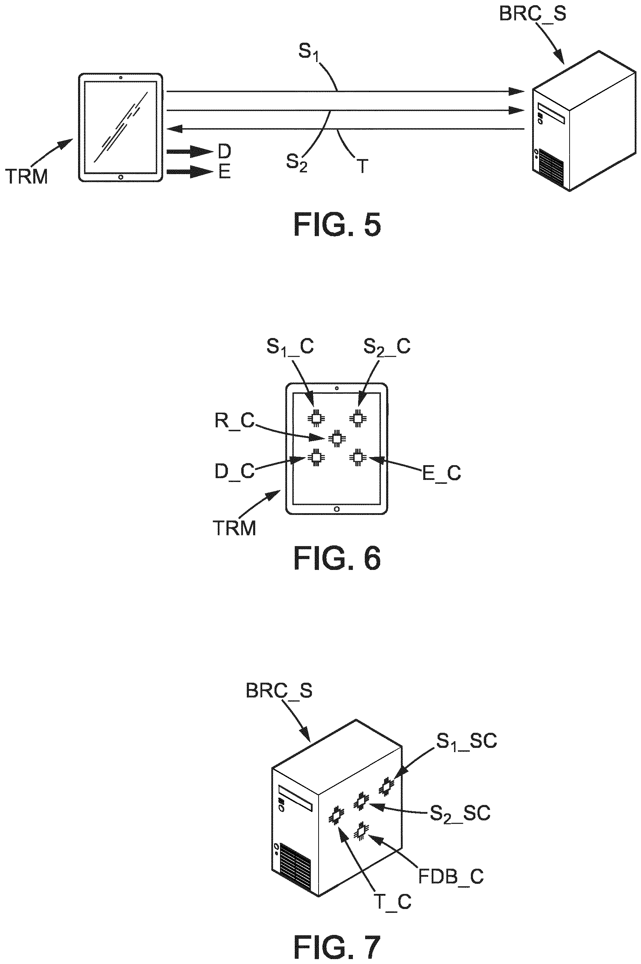

La figure 5 représente un procédé selon un mode de réalisation de l'invention. Plus précisément, elle illustre les étapes S₁, S₂, T, D et E d'un procédé selon le premier mode de réalisation ci-dessous.

La figure 6 représente un terminal selon un mode de réalisation de l'invention. Elle montre les circuits S₁_C, S₂_C, R_C, D_C et E_C du onzième mode de réalisation ci-dessous. Ces circuits ne sont en réalité pas visibles sans ouvrir le terminal.

La figure 7 représente un serveur de diffusion selon un mode de réalisation de l'invention. Elle montre les circuits S₁_SC, S₂_SC, T_C, du douzième mode de réalisation ci-dessous. Elle illustre également un circuit FDB_C permettant de recevoir de la part des terminaux des informations sur les tailles des images contenues dans les sous-ensembles transmis, afin de transmettre à l'avenir des sous-ensembles de taille minimale. Ces circuits ne sont en réalité pas visibles sans ouvrir le terminal.

Un premier mode de réalisation concerne un procédé d'extraction sélective, par un terminal (par exemple l'un des terminaux TRM, TRM₁ et TRM₂ représentés sur les figures), d'au moins une image à extraire contenue dans un flux vidéo chiffré stocké sur un serveur BRC_S. Par serveur on entend serveur physique (par opposition à un serveur purement logiciel). Le serveur est incapable de déchiffrer ledit flux vidéo chiffré. Par exemple, les clés pertinentes ne lui sont pas communiquées pour des raisons de sécurité. Alternativement, cela est simplement dû à une répartition des tâches ne lui conférant pas cette prérogative de déchiffrement. Selon une mise en œuvre possible, lorsque plusieurs qualités du même flux vidéo chiffré sont disponibles, la qualité la plus faible est sélectionnée. Ceci permet de limiter les besoins en bande passante, et ne présente pas d'inconvénient notable car dans le cadre du procédé considéré, une qualité faible est en principe acceptable (puisqu'il s'agit de construire une représentation approximée du flux vidéo pour permettre une navigation plus aisée dans ce flux vidéo).

Le flux vidéo chiffré est divisé en blocs chiffrés L₁, L₂, L₃, L_{N}. Chaque bloc chiffré contient plusieurs images chiffrées. Par "contient plusieurs images chiffrées" on entend que le bloc chiffré comprend des données qui, après avoir été déchiffrées, sont égales à une représentation numérique desdites images. Selon une mise en œuvre possible, le procédé n'est prévu pour extraire, pour chaque bloc chiffré, que strictement moins d'images que le nombre d'images contenues dans ce bloc chiffré. Selon une mise en œuvre possible, chaque bloc est chiffré de manière conventionnelle à l'aide d'une clé de session symétrique. Cette clé de session symétrique est par exemple une clé DES, une clé 3DES, une clé AES, une clé RC5, etc. La clé de session est inconnue du serveur de diffusion BRC_S. Cette clé de session est par exemple calculée (ou générée aléatoirement) par un serveur de gestion de droits DRM_S. Le serveur de gestion de droits DRM_S chiffre cette clé de session, par exemple à l'aide d'un algorithme de chiffrement asymétrique, tel qu'un algorithme RSA, un algorithme basé sur des courbes elliptiques, etc. Le serveur de gestion de droits DRM_S transmet alors cette clé de session sous forme chiffrée au terminal TRM. Alternativement, le serveur de gestion de droits DRM_S transmet non pas la clé de session mais des éléments permettant au terminal TRM de calculer la clé de session. Tout autre mécanisme d'échange de clé de session est possible.

Selon une mise en œuvre possible, chaque bloc de flux vidéo a pour taille un multiple d'un bloc d'entrée de l'algorithme de chiffrement symétrique utilisé. Par exemple, une clé de session AES opère sur des blocs de 128 bits soit 16 octets. Chaque bloc de flux vidéo peut alors avoir une taille multiple de 16 octets. Alternativement, le bloc chiffré comprend des métadonnées supplémentaires dont la taille n'est pas multiple de la taille des blocs utilisés par l'algorithme de chiffrement symétrique utilisé.

Le procédé comprend une sélection S₁ d'un bloc chiffré L₁ (voire de plusieurs blocs chiffrés) du flux vidéo chiffré, ledit bloc chiffré contenant une image à extraire. Selon une mise en œuvre, cette sélection est explicite (par exemple, la sélection est effectuée en indiquant un numéro d'ordre du bloc chiffré dans le flux vidéo considéré). Selon une mise en œuvre alternative, cette sélection est implicite. Par exemple, en sollicitant de la part du serveur BRC_S un fichier comprenant des informations situées dans le bloc chiffré L₁, le terminal peut opérer une sélection implicite du bloc L₁. Selon une mise en œuvre possible, la sélection (implicite ou explicite) du bloc est opérée par le terminal et communiquée au serveur. Selon une autre mise en œuvre possible, la sélection (implicite ou explicite) du bloc est opérée par le serveur.

Le procédé comprend une sélection S₂ d'un sous-ensemble dudit bloc chiffré L₁ contenant ladite image à extraire. Selon une mise en œuvre, cette sélection est explicite. Selon une mise en œuvre alternative, cette sélection est implicite. Par exemple, en sollicitant de la part du serveur BRC_S un fichier comprenant des informations situées dans le sous-ensemble considéré du bloc chiffré L₁, le terminal peut opérer une sélection implicite de ce sous-ensemble du bloc chiffré L₁. Selon une mise en œuvre possible, le sous-ensemble est défini par sa taille (exprimée par exemple en nombre d'octets). Cette information peut suffire lorsque le sous-ensemble commence au début du bloc chiffré, ou à une position fixe dans le bloc chiffré. Selon une mise en œuvre alternative, le sous-ensemble est défini par sa position de début (exprimée par exemple en nombre d'octets à partir du début du bloc chiffré considéré) et par sa taille (exprimée par exemple en nombre d'octets). Selon une mise en œuvre alternative, le sous-ensemble est défini par sa position de début (exprimée par exemple en nombre d'octets à partir du début du bloc chiffré considéré) et par sa position de fin (exprimée par exemple en nombre d'octets à partir du début du bloc chiffré considéré). Selon une mise en œuvre possible, une sélection explicite du sous-ensemble consiste à transmettre du terminal au serveur le ou les éléments de définition du sous-ensemble concerné (par exemple sa taille et éventuellement sa position). Selon une mise en œuvre possible, la sélection (implicite ou explicite) du sous ensemble est opérée par le terminal et communiquée au serveur. Selon une autre mise en œuvre possible, la sélection (implicite ou explicite) du sous ensemble est opérée par le serveur.

Le procédé comprend une transmission T, par le serveur au terminal, dudit sous-ensemble. Selon une mise en œuvre possible, le terminal sollicite explicitement la transmission T. Selon une mise en œuvre alternative, la transmission T intervient automatiquement de la part du serveur BRC_S.

Le procédé comprend un déchiffrement D dudit sous-ensemble par le terminal. Pour pouvoir déchiffrer, le terminal doit connaître le mode de chiffrement. Le chiffrement des blocs, quel que soit l'algorithme symétrique utilisé, s'opère par exemple en mode ECB (acronyme correspondant à l'expression de langue anglaise Electronic Code Book, signifiant livre de code électronique), ou, plus fréquemment (car c'est davantage sécurisé) en mode CBC (acronyme correspondant à l'expression de langue anglaise Cipher Block Chaining signifiant chaînage de chiffrement par bloc). En mode ECB, chaque bloc du bloc chiffré est chiffré indépendamment des autres. N'importe quel bloc peut donc être déchiffré si l'on connaît la clé de chiffrement/déchiffrement. En mode CBC, plus sûr, chaque bloc du bloc chiffré a été chiffré en tenant compte du bloc immédiatement précédent du bloc chiffré. Pour déchiffrer, il faut donc connaître la valeur de ce bloc précédent du bloc chiffré. Afin de procéder au déchiffrement D, il est donc nécessaire, en cas de mode CBC, d'obtenir les 16 octets (dans le cas de l'AES) précédant directement le sous-ensemble à déchiffrer au sein du bloc considéré, sauf pour le tout premier bloc du bloc chiffré (qui peut être déchiffré de façon autonome). Le sous-ensemble intègre donc, le cas échéant, les 16 octets précédents (pour l'AES), et plus généralement le nombre d'octets sur lequel opère l'algorithme de chiffrement symétrique utilisé (s'il ne s'agit pas de l'AES).

Le procédé comprend une extraction E, par le terminal, de ladite image à extraire à partir dudit sous-ensemble déchiffré. Une fois le sous-ensemble déchiffré, il convient en effet d'extraire l'image recherchée. Ceci peut s'opérer en tentant de décompresser le fichier débutant au début du sous-ensemble déchiffré. En cas d'échec, il faut recommencer en fixant le début un octet plus loin, et ainsi de suite jusqu'à ce que la décompression fonctionne. Alternativement, des métadonnées indiquent le début de l'image.

Selon un deuxième mode de réalisation, un procédé d'extraction sélective selon le premier mode de réalisation, comprend, après l'extraction de ladite image à extraire à partir dudit sous-ensemble déchiffré, une transmission du terminal au serveur BRC_S de la taille de l'image chiffrée à extraire. Selon une variante, un procédé d'extraction sélective selon le premier mode de réalisation, comprend, après l'extraction de ladite image à extraire à partir dudit sous-ensemble déchiffré, une transmission du terminal au serveur BRC_S de la taille de l'image chiffrée à extraire ainsi que de la position de cette image (lorsque cette position n'est pas connue à l'avance ou facilement déductible) au sein du bloc chiffré. Ainsi le serveur BRC_S peut-il pour la suite mémoriser les tailles et localisations des différentes images. Lorsqu'elles sont nécessaires à nouveau, il n'est plus nécessaire de transmettre un sous-ensemble de taille estimée (généralement beaucoup plus importante que la réalité afin de tenir compte de la marge d'erreur possible). Il est possible de transmettre un sous-ensemble de la plus petite taille possible.

Alternativement, il est possible d'installer une émulation logicielle de terminal sur le serveur de diffusion BRC_C, de façon à y avoir accès au clés. Ainsi, c'est le serveur lui-même qui se met à jour grâce à un terminal émulé.

Selon un troisième mode de réalisation, un procédé d'extraction sélective selon l'un des premier et deuxième modes de réalisation comprend une sélection, par le terminal, de tous les blocs chiffrés du flux vidéo chiffré. Au moins une image par bloc chiffré a alors vocation à être extraite du flux.

Selon un quatrième mode de réalisation, un procédé d'extraction sélective selon l'un des premier au troisième modes de réalisation, comprend, pour chaque bloc chiffré sélectionné, une sélection d'un unique sous-ensemble contenant une unique image à extraire pour ledit bloc chiffré sélectionné. Ceci est suffisant pour des flux vidéo d'une durée d'au moins 10-20 minutes, pour lesquels on garantit ainsi des images en nombre suffisant et espacées . Ainsi, une seule image est extraite par bloc chiffré.

Selon un cinquième mode de réalisation, l'unique sous-ensemble d'un procédé d'extraction sélective selon le quatrième mode de réalisation, sélectionné pour un bloc chiffré sélectionné, commence au début dudit bloc chiffré sélectionné.

En effet, ceci est avantageux car une des images du bloc chiffré est plus simple à localiser: la première, dont la position est en général connue (c'est le tout début du bloc chiffré), seule la taille restant le cas échéant à déterminer.

Selon un sixième mode de réalisation, la taille du sous-ensemble sélectionné par un terminal selon un procédé d'extraction sélective selon le cinquième mode de réalisation est par défaut une taille prédéterminée (par exemple 5% de la taille du bloc sélectionné, ou encore une taille constante, identique pour tous les blocs du flux).

Selon une mise en œuvre possible, cette taille prédéterminée est constante et est égale à la taille maximale possible d'une image chiffrée dans le flux vidéo chiffré. La taille maximale, en octets, d'une image chiffrée est la taille de l'image non chiffrée, arrondie au multiple le plus proche (supérieur ou égal) de la taille du bloc de l'algorithme de chiffrement symétrique utilisé, plus une fois ou deux fois la taille du bloc de l'algorithme de chiffrement symétrique utilisé (une fois en cas de mode ECB, deux fois en cas de mode CBC). Par exemple, pour une image de taille maximale de 200 octets et une taille de bloc de chiffrement de 16 octets, la taille maximale de l'image est: 13*16+16+16 = 208+16+16 = 240 octets (en mode CBC, si l'image ne se situe pas au tout début du flux vidéo).

Cependant, la taille maximale d'une image peut être très élevée, et n'avoir qu'une probabilité d'occurrence très faible (voire totalement négligeable), ce qui est souvent le cas en pratique.

Selon une mise en œuvre possible, au lieu d'utiliser comme taille prédéterminée une taille constante égale à la taille maximale possible de l'image chiffrée, c'est une taille maximale probable qui est utilisée. Par exemple, il peut s'agir de la taille maximale d'un certain pourcentage (par exemple 99,95%) des images les moins lourdes (c'est-à-dire ayant la taille la moins importante) des images possibles. Dans l'exemple considéré, la taille est donc la taille de l'image ayant la plus grande taille parmi les 99,95% des images ayant la plus petite taille. Selon une mise en œuvre possible, dans l'hypothèse où une image correspondrait à l'une des images les plus lourdes (c'est-à-dire, dans l'exemple précité, à une des 0,05% d'images les plus lourdes), la retransmission d'une portion plus importante du bloc est sollicitée afin d'obtenir toute l'image. Selon une mise en œuvre possible, le pourcentage (par exemple les 99,95% précités) est mesuré non pas seulement sur les images du flux considéré, mais sur l'ensemble des images possibles. Ainsi, pour de très nombreux flux, aucune image n'a besoin d'être retransmise du fait d'une taille constante prédéterminée trop faible.

Selon une mise en œuvre possible, la taille du sous-ensemble sélectionné par un terminal selon un procédé d'extraction sélective selon le cinquième mode de réalisation est par défaut une taille fixée en fonction d'une caractéristique du bloc sélectionné. La taille peut donc être différente d'un bloc à l'autre. Par exemple, la taille du sous-ensemble sélectionné est fixée à un pourcentage de la taille du bloc sélectionné (par exemple 5% de la taille du bloc sélectionné). Selon une mise en œuvre possible, la taille du sous-ensemble sélectionné est fixée en fonction de la qualité de l'extrait du flux contenu dans le bloc (qui est une autre caractéristique possible). Ainsi, si la qualité permet de conclure que le bloc contient 240 images dont 20 images I (par exemple une image I toutes les demi secondes, le bloc ayant par exemple une durée de dix secondes), et de conclure également que chaque image I devrait représenter en moyenne 2% de la taille du bloc, alors il peut être envisagé d'extraire 4% du flux ce qui garantit l'extraction d'une image I pouvant faire jusqu'au double de la taille moyenne estimée d'une image I du bloc. Ceci n'est évidemment qu'un exemple possible.

Dans tous les cas, cette valeur par défaut (taille prédéterminée) peut ne s'appliquer que lorsqu'il n'y a pas de taille connue à l'avance reçue par exemple d'un autre terminal ayant antérieurement formé une requête portant sur le même bloc sélectionné (ainsi qu'envisagé notamment dans le deuxième mode de réalisation).

Selon un septième mode de réalisation, chaque bloc chiffré sélectionné d'un procédé d'extraction sélective selon l'un des premier au troisième modes de réalisation ne comprend que deux images à extraire. Il peut s'agir notamment de l'image I située au début du bloc chiffré identifié, ainsi que d'une l'image I du milieu du bloc chiffré.

Avantageusement, l'extraction d'une deuxième image par bloc n'est déclenchée que pour des flux vidéo d'une durée totale inférieure à un seuil déterminé (par exemple un seuil compris entre 10 et 20 minute). Selon une mise en œuvre possible, le procédé d'extraction sélective extrait trois, quatre, voire cinq images par bloc. Ceci peut être utile dans le cas de flux vidéo très courts (moins de dix minutes par exemple).

Selon un huitième mode de réalisation, un procédé d'extraction sélective selon l'un des premier au septième modes de réalisation comprend une concaténation, par le serveur, de plusieurs sous-ensembles sélectionnés, et une transmission desdits sous-ensembles concaténés par le serveur au terminal au sein d'un même paquet. Selon une mise en œuvre possible, le serveur est agencé pour concaténer autant de sous-ensembles qu'il y a de place pour des sous-ensembles dans un paquet de taille optimale (par exemple un paquet ayant la taille maximale autorisée sur le réseau de communication utilisé). Le MTU d'un réseau Ethernet 2 est de 1500 octets (taille maximale du paquet, du moins sans fragmentation), ce qui est très court pour le procédé envisagé. S'il y a plus de sous-ensembles que ne le permet cette mise en œuvre (les sous-ensembles ne tenant pas tous au sein d'un paquet unique), il est opportun de diviser la communication en plusieurs paquets. Alternativement, il est possible de créer un paquet de taille plus importante et de s'appuyer sur des mécanismes de fragmentation du réseau considéré. Un paquet IPv4 ne peut faire que jusqu'à 64Ko, ce qui est encore une fois assez court dans le contexte du procédé envisagé. Cependant, d'autres protocoles permettent des paquets plus grands. Par exemple, IPv6 permet des paquets de très grande taille (jusqu'à 4Go) appelés "jumbogram".

Selon un neuvième mode de réalisation, un programme d'ordinateur comprend une série d'instructions qui, lorsqu'elles sont exécutées par au moins un processeur, mettent en œuvre un procédé selon l'une des revendications précédentes. Selon une mise en œuvre possible, Ce programme est par exemple écrit dans un langage de bas niveau (tel qu'un langage assembleur). Il peut également être écrit dans un langage de plus haut niveau, tel que le langage C. Ce programme peut être séparé en composants enregistrés sur des supports distincts. Par exemple un composant peut être enregistré sur un téléphone portable ou sur un ordinateur personnel, et un ou plusieurs autre(s) composant(s) peu(ven)t être enregistré(s) sur un serveur de diffusion. Chaque composant peut être écrit dans un langage différent.

Selon un dixième mode de réalisation, des supports de stockage non transitoires lisibles par ordinateur stockent un programme d'ordinateur selon le neuvième mode de réalisation. Ces supports sont par exemple une mémoire réinscriptible (telle qu'une mémoire Flash ou EEPROM) d'un téléphone portable et/ou une mémoire de serveur informatique (par exemple une mémoire magnétique de type disque dur).

Selon un onzième mode de réalisation, un terminal TRM, TRM₁, TRM₂ est agencé pour extraire sélectivement au moins une image à extraire contenue dans un flux vidéo chiffré stocké sur un serveur BRC_S incapable de déchiffrer ledit flux vidéo chiffré. Le terminal est par exemple un téléphone portable, une tablette, un ordinateur portable, un baladeur numérique, etc. Le flux vidéo chiffré est divisé en blocs chiffrés L₁, L₂, L₃, L_{N}. Chaque bloc chiffré contient plusieurs images chiffrées.

Le terminal comprend un circuit électronique de sélection S₁_C d'un bloc chiffré du flux vidéo chiffré, ledit bloc chiffré contenant une image à extraire. Selon une mise en œuvre possible, ce circuit électronique de sélection est un circuit électronique dédié, ou un FPGA. Selon une autre mise en œuvre, ce circuit électronique de sélection est une association d'un processeur et d'une mémoire stockant un programme d'ordinateur adapté, lorsqu'il est exécuté par le processeur, pour mettre en œuvre les fonctions de circuit électronique de sélection. Ce circuit électronique peut comporter un émetteur tel qu'une carte réseau ou être connecté à un tel émetteur.

Le terminal comprend un circuit électronique de sélection S₂_C d'un sous-ensemble dudit bloc chiffré contenant ladite image à extraire. Selon une mise en œuvre possible, cet autre circuit électronique de sélection est un circuit électronique dédié, ou un FPGA. Selon une autre mise en œuvre, cet autre circuit électronique de sélection est une association d'un processeur et d'une mémoire stockant un programme d'ordinateur adapté, lorsqu'il est exécuté par le processeur, pour mettre en œuvre les fonctions de circuit électronique de sélection. Ce circuit électronique peut comporter un émetteur tel qu'une carte réseau ou être connecté à un tel émetteur.

Le terminal comprend un circuit électronique de réception R_C dudit sous-ensemble de la part du serveur. Selon une mise en œuvre possible, ce circuit électronique de réception est un circuit électronique dédié, ou un FPGA. Selon une autre mise en œuvre, ce circuit électronique de réception est une association d'un processeur et d'une mémoire stockant un programme d'ordinateur adapté, lorsqu'il est exécuté par le processeur, pour mettre en œuvre les fonctions de circuit électronique de réception. Ce circuit électronique peut comporter un récepteur tel qu'une carte réseau ou être connecté à un tel récepteur.

Le terminal comprend un circuit électronique de déchiffrement D_C du sous-ensemble sélectionné. Selon une mise en œuvre possible, ce circuit électronique de déchiffrement est un circuit électronique dédié, ou un FPGA. Selon une autre mise en œuvre, ce circuit électronique de déchiffrement est une association d'un processeur et d'une mémoire stockant un programme d'ordinateur adapté, lorsqu'il est exécuté par le processeur, pour mettre en œuvre les fonctions de circuit électronique de déchiffrement.

Le terminal comprend un circuit électronique d'extraction E_C de ladite image à extraire à partir dudit sous-ensemble déchiffré. Selon une autre mise en œuvre, ce circuit électronique d'extraction est une association d'un processeur et d'une mémoire stockant un programme d'ordinateur adapté, lorsqu'il est exécuté par le processeur, pour mettre en œuvre les fonctions de circuit électronique d'extraction. L'extraction peut consister à tenter de décompresser les données déchiffrées, et, tant que la décompression échoue, de retenter de décompresser en recommençant un octet plus loin dans les données déchiffrées.

Selon une mise en œuvre possible, les cinq circuits électroniques qui précèdent (S₁_C, S₂_C, R_C, D_C, E_C) sont cinq circuits distinct. Selon une autre mise en œuvre, il s'agit de cinq circuits comprenant un processeur partagé entre les cinq circuits.

Selon un douzième mode de réalisation, un serveur BRC_S est agencé pour stocker un flux vidéo chiffré qu'il n'est pas en mesure de déchiffrer. Le flux vidéo chiffré est divisé en blocs chiffrés (L₁, L₂, L₃, L_{N}). Chaque bloc chiffré contient plusieurs images chiffrées.

Le serveur comprend un circuit électronique de sélection S₁_SC d'un bloc chiffré du flux vidéo chiffré, ledit bloc chiffré contenant une image à extraire. Selon une mise en œuvre, ce circuit électronique de sélection est agencé pour coopérer avec un circuit électronique de sélection de terminal, qui lui envoie un ordre de sélection à mettre en œuvre. Selon une mise en œuvre possible, ce circuit électronique de sélection est un circuit électronique dédié, ou un FPGA. Selon une autre mise en œuvre, cet autre circuit électronique de sélection est une association d'un processeur et d'une mémoire stockant un programme d'ordinateur adapté, lorsqu'il est exécuté par le processeur, pour mettre en œuvre les fonctions de circuit électronique de sélection. Ce circuit électronique peut comporter un récepteur tel qu'une carte réseau ou être connecté à un tel récepteur.

Le serveur comprend un circuit électronique de sélection S₂_SC d'un sous-ensemble dudit bloc chiffré contenant ladite image à extraire. Selon une mise en œuvre, cet autre circuit électronique de sélection est agencé pour coopérer avec un circuit électronique de sélection de terminal, qui lui envoie un ordre de sélection à mettre en œuvre. Selon une mise en œuvre possible, cet autre circuit électronique de sélection est un circuit électronique dédié, ou un FPGA. Selon une autre mise en œuvre, cet autre circuit électronique de sélection est une association d'un processeur et d'une mémoire stockant un programme d'ordinateur adapté, lorsqu'il est exécuté par le processeur, pour mettre en œuvre les fonctions de circuit électronique de sélection. Ce circuit électronique peut comporter un récepteur tel qu'une carte réseau ou être connecté à un tel émetteur.

Le serveur comprend un circuit électronique de transmission T_C dudit sous-ensemble à un terminal.

Selon une mise en œuvre possible, les trois circuits électroniques qui précèdent (S₁_SC, S₂_SC, T_C) sont trois circuits distinct. Selon une autre mise en œuvre, il s'agit de trois circuits comprenant un processeur partagé entre les trois circuits.

Selon un mode de réalisation possible, un système de distribution de flux vidéo comprend un terminal selon le onzième mode de réalisation et un serveur selon le douzième mode de réalisation.

L'invention ne se limite pas aux formes de réalisation décrites ci-avant à titre d'exemples. Les mémoires utilisables couvrent tout type de mémoire.

Les modes de réalisations décrits en relation avec le procédé selon des modes de réalisation de l'invention peuvent être transposés aux terminaux et/ou au serveur BRC_S selon des modes de réalisation de l'invention, ainsi qu'aux programmes d'ordinateur et aux supports de stockage du programme selon des modes de réalisation de l'invention, et réciproquement.

## Revendications

1. Procédé d'extraction sélective, par un terminal (TRM, TRM₁, TRM₂), d'au moins une image à extraire contenue dans un flux vidéo chiffré,
plusieurs versions chiffrées dudit flux vidéo chiffré étant stockées sur un serveur (BRC_S) incapable de déchiffrer lesdites versions chiffrées du flux vidéo,
lesdites plusieurs versions chiffrées comprenant au moins une version basse résolution et une version haute résolution,
chaque version chiffrée dudit flux vidéo chiffré étant divisée en blocs chiffrés (L₁, L₂, L₃, L_{N}), chaque bloc chiffré contenant plusieurs images chiffrées, ledit procédé comprenant :
- une sélection (S₁) d'un bloc chiffré (L₁) de la version chiffrée basse résolution du flux vidéo chiffré, ledit bloc chiffré contenant une image à extraire ;
**caractérisé en ce que** le procédé comprend en outre :
- une sélection (S₂) d'un sous-ensemble dudit bloc chiffré (L₁) contenant ladite image à extraire, dans lequel ledit sous-ensemble commence au début dudit bloc chiffré et a une taille égale à un pourcentage prédéterminé de la taille dudit bloc chiffré ;
- une transmission (T), par le serveur au terminal, dudit sous-ensemble ;
- un déchiffrement (D) dudit sous-ensemble par le terminal ;
- une extraction (E), par le terminal, de ladite image à extraire à partir dudit sous-ensemble déchiffré.

2. Procédé d'extraction sélective selon la revendication 1, dans lequel la taille dudit sous-ensemble sélectionné est égale à 5% de la taille dudit bloc chiffré.

3. Procédé d'extraction sélective selon l'une des revendications précédentes, comprenant, après l'extraction de ladite image à extraire à partir dudit sous-ensemble déchiffré, une transmission du terminal au serveur de la taille de l'image chiffrée à extraire.

4. Procédé d'extraction sélective selon l'une des revendications précédentes, comprenant une sélection, par le terminal, de tous les blocs chiffrés de ladite version chiffrée basse résolution du flux vidéo.

5. Procédé d'extraction sélective selon l'une des revendications 1 à 4, comprenant en outre :
- une sélection d'un deuxième sous-ensemble dudit bloc chiffré (L₁) contenant une deuxième image à extraire, ledit deuxième sous-ensemble contenant un milieu dudit bloc chiffré ;
- une transmission (T), par le serveur au terminal, dudit deuxième sous-ensemble ;
- un déchiffrement (D) dudit deuxième sous-ensemble par le terminal ;
- une extraction (E), par le terminal, de ladite deuxième image à extraire à partir dudit deuxième sous-ensemble déchiffré.

6. Procédé d'extraction sélective selon la revendication 5, dans lequel ladite sélection dudit deuxième sous-ensemble est effectuée à l'aide d'une estimation statistique.

7. Procédé d'extraction sélective selon l'une des revendications précédentes, comprenant une concaténation, par le serveur, de plusieurs sous-ensembles sélectionnés, et une transmission desdits sous-ensembles concaténés par le serveur au terminal au sein d'un même paquet.

8. Programme d'ordinateur comprenant une série d'instructions qui, lorsqu'elles sont exécutées par au moins un processeur, mettent en œuvre un procédé selon l'une des revendications précédentes.

9. Support de stockage non transitoire lisible par ordinateur, stockant un programme d'ordinateur selon la revendication 8.

10. Terminal (TRM, TRM₁, TRM₂) agencé pour extraire sélectivement au moins une image à extraire contenue dans un flux vidéo chiffré,
plusieurs versions chiffrées dudit flux vidéo chiffré étant stockées sur un serveur (BRC_S) incapable de déchiffrer lesdites versions chiffrées du flux vidéo,
lesdites plusieurs versions chiffrées dudit flux vidéo chiffré comprenant au moins une version basse résolution et une version haute résolution,
chaque version chiffrée dudit flux vidéo chiffré étant divisée en blocs chiffrés (L₁, L₂, L₃, L_{N}), chaque bloc chiffré contenant plusieurs images chiffrées, ledit terminal comprenant :
un circuit électronique de sélection (S₁_C) d'un bloc chiffré de la version chiffrée basse résolution du flux vidéo, ledit bloc chiffré contenant au moins une image à extraire ;
**caractérisé en ce que** le terminal comprend en outre :
un circuit électronique de sélection (S₂_C) d'un sous-ensemble dudit bloc chiffré contenant ladite image à extraire, dans lequel ledit sous-ensemble commence au début dudit bloc chiffré et a une taille égale à un pourcentage prédéterminé de la taille dudit bloc chiffré ;
un circuit électronique de réception (R_C) dudit sous-ensemble de la part du serveur ;
un circuit électronique de déchiffrement (D_C) dudit sous-ensemble ;
un circuit électronique d'extraction (E_C) de ladite image à extraire à partir dudit sous-ensemble déchiffré.

11. Serveur (BRC_S) agencé pour stocker plusieurs versions chiffrées d'un flux vidéo chiffré, ledit serveur n'étant pas en mesure de déchiffrer lesdites versions chiffrées dudit flux vidéo chiffré,
lesdites plusieurs versions chiffrées dudit flux vidéo chiffré comprenant au moins une version basse résolution et une version haute résolution,
chaque version chiffrée du flux vidéo étant divisée en blocs chiffrés (L₁, L₂, L₃, L_{N}), chaque bloc chiffré contenant plusieurs images chiffrées, ledit serveur comprenant :
un circuit électronique de sélection (S₁_SC) d'un bloc chiffré de la version chiffrée basse résolution du flux vidéo chiffré, ledit bloc chiffré contenant une image à extraire ;
un circuit électronique de sélection (S₂_SC) d'un sous-ensemble dudit bloc chiffré contenant ladite image à extraire, dans lequel ledit sous-ensemble commence au début dudit bloc chiffré et a une taille égale à un pourcentage prédéterminé de la taille dudit bloc chiffré ;
un circuit électronique de transmission (T_C) dudit sous-ensemble à un terminal.

## Patentansprüche

1. Selektives Extraktionsverfahren, durch ein Terminal (TRM, TRM₁, TRM₂), von wenigstens einem zu extrahierenden Bild, das in einem verschlüsselten Videostream enthalten ist, wobei mehrere verschlüsselte Versionen des verschlüsselten Videostreams auf einem Server (BRC_S) gespeichert werden, der nicht in der Lage ist, die verschlüsselten Versionen des Videostreams zu entschlüsseln,
wobei die mehreren verschlüsselten Versionen wenigstens eine Version mit niedriger Auflösung und eine Version mit hoher Auflösung umfassen,
wobei jede verschlüsselte Version des verschlüsselten Videostreams in verschlüsselte Blöcke (L₁, L₂, L₃, L_{N}) unterteilt wird, wobei jeder verschlüsselte Block mehrere verschlüsselte Bilder umfasst, wobei das Verfahren umfasst:
- eine Auswahl (S₁) eines verschlüsselten Blocks (L₁) der verschlüsselten Version mit niedriger Auflösung des verschlüsselten Videostreams, wobei der verschlüsselte Block ein zu extrahierendes Bild enthält;
**dadurch gekennzeichnet, dass** das Verfahren ferner umfasst:
- eine Auswahl (S₂) einer Teilmenge des verschlüsselten Blocks (L₁), der das zu extrahierende Bild enthält, wobei die Teilmenge am Anfang des Chiffreblocks beginnt und eine Größe hat, die gleich einem vorbestimmten Prozentsatz der Größe des verschlüsselten Blocks ist;
- eine Übertragung (T) der Teilmenge durch den Server an das Terminal;
- eine Entschlüsselung (D) der Teilmenge durch das Terminal;
- eine Extraktion (E) des zu extrahierenden Bildes aus der entschlüsselten Teilmenge durch das Terminal.

2. Selektives Extraktionsverfahren nach Anspruch 1, wobei die Größe der ausgewählten Teilmenge gleich 5 % der Größe des verschlüsselten Blocks ist.

3. Selektives Extraktionsverfahren nach einem der vorhergehenden Ansprüche, welches nach der Extraktion des zu extrahierenden Bildes aus der entschlüsselten Teilmenge eine Übertragung der Größe des zu extrahierenden verschlüsselten Bildes vom Terminal zum Server umfasst.

4. Selektives Extraktionsverfahren nach einem der vorhergehenden Ansprüche, welches eine Auswahl aller verschlüsselten Blöcke der verschlüsselten Version mit niedriger Auflösung des Videostreams durch das Terminal umfasst.

5. Selektives Extraktionsverfahren nach einem der Ansprüche 1 bis 4, ferner umfassend:
- eine Auswahl einer zweiten Teilmenge des verschlüsselten Blocks (L₁), der ein zweites zu extrahierendes Bild enthält, wobei die zweite Teilmenge eine Mitte des verschlüsselten Blocks enthält;
- eine Übertragung (T) der zweiten Teilmenge durch den Server an das Terminal;
- eine Entschlüsselung (D) der zweiten Teilmenge durch das Terminal;
- eine Extraktion (E) des zweiten zu extrahierenden Bildes aus der entschlüsselten zweiten Teilmenge durch das Terminal.

6. Selektives Extraktionsverfahren nach Anspruch 5, wobei die Auswahl der zweiten Teilmenge mit Hilfe einer statistischen Schätzung durchgeführt wird.

7. Selektives Extraktionsverfahren nach einem der vorhergehenden Ansprüche, welches eine Verkettung mehrerer ausgewählter Teilmengen durch den Server und eine Übertragung der vom Server verketteten Teilmengen an das Terminal innerhalb eines einzigen Pakets umfasst.

8. Computerprogramm, umfassend eine Reihe von Anweisungen, die, wenn sie von wenigstens einem Prozessor ausgeführt werden, ein Verfahren nach einem der vorhergehenden Ansprüche implementieren.

9. Computerlesbares, nicht transitorisches Speichermedium, das ein Computerprogramm nach Anspruch 8 speichert.

10. Terminal (TRM, TRM₁, TRM₂), welches dazu ausgebildet ist, selektiv wenigstens ein in einem verschlüsselten Videostream enthaltenes, zu extrahierendes Bild zu extrahieren, wobei mehrere verschlüsselte Versionen des verschlüsselten Videostreams auf einem Server (BRC_S) gespeichert sind, der die verschlüsselten Versionen des Videostreams nicht entschlüsseln kann,
wobei die mehreren verschlüsselten Versionen des verschlüsselten Videostreams wenigstens eine Version mit niedriger Auflösung und eine Version mit hoher Auflösung umfassen,
wobei jede verschlüsselte Version des verschlüsselten Videostreams in verschlüsselte Blöcke (L₁, L₂, L₃, L_{N}) unterteilt ist, wobei jeder verschlüsselte Block mehrere verschlüsselte Bilder enthält, wobei das Terminal umfasst:
eine elektronische Schaltung zur Auswahl (S₁_C) eines verschlüsselten Blocks der verschlüsselten Version mit niedriger Auflösung des Videostreams, wobei der verschlüsselte Block wenigstens ein zu extrahierendes Bild umfasst;
**dadurch gekennzeichnet, dass** das Terminal ferner umfasst:
eine elektronische Schaltung zum Auswählen (S₂_C) einer Teilmenge des verschlüsselten Blocks, der das zu extrahierende Bild enthält, wobei die Teilmenge am Anfang des verschlüsselten Blocks beginnt und eine Größe hat, die gleich einem vorbestimmten Prozentsatz der Größe des verschlüsselten Blocks ist;
eine elektronische Schaltung zum Empfangen (R_C) der Teilmenge vom Server; eine elektronische Schaltung zum Entschlüsseln (D_C) der genannten Teilmenge; eine elektronische Schaltung zum Extrahieren (E_C) des aus der entschlüsselten Teilmenge zu extrahierenden Bildes.

11. Server (BRC_S), der dazu ausgebildet ist, mehrere verschlüsselte Versionen eines verschlüsselten Videostreams zu speichern, wobei der Server nicht in der Lage ist, die verschlüsselten Versionen des verschlüsselten Videostreams zu entschlüsseln, wobei die mehreren verschlüsselten Versionen des verschlüsselten Videostreams wenigstens eine Version mit niedriger Auflösung und eine Version mit hoher Auflösung umfassen,
wobei jede verschlüsselte Version des Videostreams in verschlüsselte Blöcke (L₁, L₂, L₃, L_{N}) unterteilt ist, wobei jeder verschlüsselte Block mehrere verschlüsselte Bilder enthält, wobei der Server umfasst:
eine elektronische Schaltung zur Auswahl (S₁_SC) eines verschlüsselten Blocks der verschlüsselten Version mit niedriger Auflösung des verschlüsselten Videostreams, wobei der verschlüsselte Block ein zu extrahierendes Bild enthält;
eine elektronische Schaltung zum Auswählen (S₂_SC) einer Teilmenge des verschlüsselten Blocks, der das zu extrahierende Bild enthält, wobei die Teilmenge am Anfang des verschlüsselten Blocks beginnt und eine Größe hat, die gleich einem vorbestimmten Prozentsatz der Größe des verschlüsselten Blocks ist;
eine elektronische Schaltung zur Übertragung (T_C) der Teilmenge an ein Terminal.

## Claims

1. A method for selectively extracting, by a terminal (TRM, TRM₁, TRM₂), at least one image to be extracted contained in an encrypted video stream, several encrypted versions of said encrypted video stream being stored on a server (BRC_S) unable to decrypt said encrypted versions of the video stream,
said several encrypted versions comprising at least a low resolution version and a high resolution version,
each encrypted version of said encrypted video stream being divided into encrypted blocks (L₁, L₂, L₃, L_{N}), each encrypted block containing several encrypted images, said method comprising:
- selecting (S₁) an encrypted block (L₁) of the encrypted low resolution version of the encrypted video stream, said encrypted block containing an image to be extracted;
**characterised in that** the method further comprises:
- selecting (S₂) a subset of said encrypted block (L₁) containing said image to be extracted, wherein said subset starts at the beginning of said encrypted block and has a size equal to a predetermined percentage of the size of said encrypted block;
- transmitting (T), by the server to the terminal, said subset;
- decrypting (D) said subset by the terminal;
- extracting (E), by the terminal, said image to be extracted from said decrypted subset.

2. The selective extraction method according to claim 1, wherein the size of said selected subset is equal to 5% of the size of said encrypted block.

3. The selective extraction method according to one of the preceding claims, comprising, after extracting said image to be extracted from said decrypted subset, transmitting, from the terminal to the server, the size of the encrypted image to be extracted.

4. The selective extraction method according to one of the preceding claims, comprising selecting, by the terminal, all the encrypted blocks of said encrypted low resolution version of the video stream.

5. The selective extraction method according to one of claims 1 to 4, further comprising:
- selecting a second subset of said encrypted block (L₁) containing a second image to be extracted, said second subset containing a middle of said encrypted block;
- transmitting (T), by the server to the terminal, said second subset;
- decrypting (D) said second subset by the terminal;
- extracting (E), by the terminal, said second image to be extracted from said second decrypted subset.

6. The selective extraction method according to claim 5, wherein said selecting said second subset is performed using a statistical estimation.

7. The selective extraction method according to one of the preceding claims, comprising concatenating, by the server, several selected subsets, and transmitting said subsets concatenated by the server to the terminal within a same packet.

8. A computer program comprising a series of instructions which, when run by at least one processor, implement a method according to one of the preceding claims.

9. A computer-readable non-transitory storage medium, storing a computer program according to claim 8.

10. A terminal (TRM, TRM₁, TRM₂) arranged to selectively extract at least one image to be extracted contained in an encrypted video stream,
several encrypted versions of said encrypted video stream being stored on a server (BRC_S) unable to decrypt said encrypted versions of the video streams,
said several encrypted versions of said encrypted video stream comprising at least a low resolution version and a high resolution version,
each encrypted version of said encrypted video stream being divided into encrypted blocks (L₁, L₂, L₃, L_{N}), each encrypted block containing several encrypted images, said terminal comprising:
an electronic circuit for selecting (S₁_C) an encrypted block of the encrypted low resolution version of the video stream, said encrypted block containing at least one image to be extracted;
**characterised in that** the terminal further comprises:
an electronic circuit for selecting (S₂_C) a subset of said encrypted block containing said image to be extracted, wherein said subset starts at the beginning of said encrypted block and has a size equal to a predetermined percentage of the size of said encrypted block;
an electronic circuit for receiving (R_C) said subset from the server;
an electronic circuit for decrypting (D_C) said subset;
an electronic circuit for extracting (E_C) said image to be extracted from said decrypted subset.

11. A server (BRC_S) arranged to store several encrypted versions of an encrypted video stream, said server not being capable of decrypting said encrypted versions of said encrypted video stream,
said several encrypted versions of said encrypted video stream comprising at least a low resolution version and a high resolution version,
each encrypted version of the video stream being divided into encrypted blocks (L₁, L₂, L₃, L_{N}), each encrypted block containing several encrypted images, said server comprising:
an electronic circuit for selecting (S₁_SC) an encrypted block of the encrypted low resolution version of the encrypted video stream, said encrypted block containing an image to be extracted;
an electronic circuit for selecting (S2_SC) a subset of said encrypted block containing said image to be extracted, wherein said subset starts at the beginning of said encrypted block and has a size equal to a predetermined percentage of the size of said encrypted block;
an electronic circuit for transmitting (T_C) said subset to a terminal.
